# EUROPEAN PATENT APPLICATION

(11) **EP 2 570 233 A2**
(43) Date of publication of application: **20.03.2013**
(21) Application number: 12184046.6
(22) Date of filing: 12.09.2012
(51) Int. Cl.: B23Q 7/04

(54) **Machine tool and loading and unloading method of work**

(30) Priority: 13.09.2011 JP 2011199761
(71) Applicant: Nakamura-Tome Precision Industry Co., Ltd., Hakusan-shi, Ishikawa (JP)
(72) Inventor: Nakamura, Nobuhide, Hakusan-shi, Ishikawa (JP)
(74) Representative: Isarpatent

(57) **Abstract**

A machine tool is provided with a tool turret, a turning apparatus which turns and positions a tool turret around a turning shaft which is orthogonal to an allocation shaft thereof, a carrier apparatus which carries in or carried out a work at a predetermined position of a peripheral edge portion of a moving region of the turret, and a work gripping device which is provided with an opening and closing pawls and an opening and closing mechanism thereof, and installed to a tool attaching portion of the turret. A transfer of the work to a carry-in position and a carry-out position of the work is carried out by utilizing a moving and positioning motion of the turret, an allocating rotation motion and a turning and positioning motion. The carry-in position and the unloading position of the work may be the same position or different positions, thereby to achieve a cost reduction of an apparatus which carries out the loading and unloading, and securely avoid an interference and a collision with a turret and a cutting tool table.

## Description

### BACKGROUND OF THE INVENTION

### Field of the Invention

This invention relates to a machine tool which is provided with a tool turret, and a loading and unloading method of a work in the machine tool.

### Description of the Conventional Art

In order to automatically and rapidly carrying out an exchange of a tool at a time of processing a work by using a plurality of tools on the same machine tool, a tool turret (hereinafter, refer simply to as "turret") is used. The turret is provided with a turret head which turns around an allocation shaft and is formed as a regular polygonal shape, and the tool is installed to a portion of each of edges of the polygon. The tool is selected by directing one of the tools to the work to be processed on the basis of a rotation (an allocating rotation) at a predetermined angle around the allocation shaft of the turret head.

The turret is frequently used in a lathe turning machine or a drilling machine, and is used by being installed to a cutting tool table which moves in a two-dimensional plane or a three-dimensional space, in the lathe turning machine. The machine tool is provided with a retention device (for example, a chuck of the lathe turning machine or a vice attached to a table of the drilling machine) which fixes the work under being processed, and at a time of continuously processing a lot of works, there are provided a loader which automatically loads a raw material work to the retention device of the machine tool from a stocker or the like which is placed outside the machine of the machine tool, and an unloader which receives the processed work from the retention device so as to unload to the outside of the machine.

It is necessary to load the raw material work to the retention device in a predetermined attitude, however attitude thereof does not necessarily coincide with an attitude of the raw material work on the stocker. Accordingly, a converting mechanism which converts the attitude of the work is necessary in the loader, and in order to make the loading of the works having various shapes possible, a control apparatus for setting a position and a direction of a loader hand at a time of transferring the work with respect to the stocker or the retention device is necessary. Further, a sensor which detects whether or not the work is securely loaded to the retention device is also necessary. The same matter is required in the unloader, at a time of unloading the processed work to a defined position under a defined attitude.

Further, in the case of carrying out the transfer of the work with respect to the retention device, it is necessary to insert a hand and a bucket (hereinafter, name generically as "hand") of the loader and the unloader into the vicinity of the retention device. The inserting position is a center portion of a moving region of the turret and the cutting tool table at a time of processing the work. Accordingly, the hand is inserted into a narrow space between the retention device and the turret or the cutting tool table, and a magnitude or a shape and a motion of the hand and a rod or an arm which supports it are limited for avoiding an interference with these devices, so that a structure and a control of the loader and the unloader become complicated.

Further, in the machine tool which is provided with a plurality of retention devices and a plurality of cutting tool tables, there has been a risk that the hand which is inserted into the machine comes into collision with the turret or the cutting tool table which carries out a processing motion on the basis of a control error at a time of carrying out the loading and unloading of the work, thereby damaging the machine.

On the other hand, in accordance with a complication of a product shape and a variation of a product, there has been a demand of making great variety of processes possible by the same machine. In order to reply to the demand, the applicant of the present application has provided a two main shafts opposed lathe turning machine provided with a turret which is provided with a tool drive shaft driving a rotary tool such as a drill, a milling cutter or the like in a cutting tool table moving in three orthogonal axial directions, in such a manner as to be capable of turning around a turning shaft which is orthogonal to the allocation shaft as disclosed in Japanese Unexamined Patent Publication No. 2010-253635.

In the case of automatically and continuously processing a lot of works by the machine tool, it is necessary to install the loader and the unloader in the machine tool. There is a case that the same apparatus is used both as the loader and the unloader, and a case that they are individually provided as the separate apparatuses, however, in any case, it is necessary to insert the loader hand and the bucket into the center portion of the processing region of the machine tool, and since the control apparatus is provided separately in the machine tool, the loader and the unloader, and the structure and the control of the loader and the unloader become complicated, so that there is a problem that considerable installing area and installing height (for example, a gantry type loader or the like) are necessary.

Particularly, in the machine tool which is provided with a plurality of retention devices for fixing the work under being processed and a plurality of turrets or cutting tool tables carrying out a complicated motion, it is often the case that the process of the work which is retained by the other retention device is carried on even under loading and unloading the work, and a demand with respect to the structure and the control of the loader and the unloader becomes severe. Therefore, a cost of the loader and the unloader rises, and there has been generated a problem that a work load of a programmer and an operator controlling this is increased.

This invention is made for solving the problem mentioned above, and provides a technical means which can carry out a loading and an unloading of a work without using a loader and an unloader which move forward to a center portion of a processing region of a machine tool so as to carry out a transfer of the work with respect to a retention device. An object of this invention is to achieve a cost reduction of an apparatus which is necessary for carrying out the loading and the unloading of the work with respect to the machine tool, and to securely avoid an interference and a collision between the apparatus which carries out the loading and the unloading of the work and a turret or a cutting tool table of a machine tool.

A machine tool in accordance with this invention is provided with a retention device 1 (1a, 1b) such as a chuck, a vice or the like which fixes a work to be processed, a cutting tool table 32 which moves in a two-dimensional plane or a three-dimensional space, a turret 2 which is provided with a plurality of tool attaching portions 31 mounted to the cutting tool table, and a turning apparatus 33 which positions the turret so as to turn around a turning shaft b which is orthogonal to an allocation shaft 24 thereof. Further, the machine tool in accordance with this invention is provided with carrier apparatuses 7 and 8 which carry in or carry out the work at a predetermined position of a peripheral edge portion in a moving region of the turret (hereinafter, refer to as "turning turret").

The machine tool in accordance with this invention can carry out the loading or the unloading of the work between a carry-in position 75 and a carry-out position 85 of the work which is the predetermined position of the peripheral edge portion, and the retention devices 1a and 1b, by installing work grip devices 5 and 6 which are provided with opening and closing pawls such as a chuck 52a, a finger 52b or the like and an opening and closing mechanism thereof at least at one position of the tool attaching portion 31 of the turret, and utilizing an opening and closing motion of the opening and closing pawls, a moving motion of the cutting tool table 32 and an allocating motion and a turning motion of the turning turret 2. The carry-in position 75 and the carry-out position 85 of the work may be the same position or different positions.

This invention can be particularly effectively employed in a lathe turning machine, more particularly a lathe turning machine which is provided with a plurality of cutting tool tables and two opposed main shafts. In the lathe turning machine, the chuck 1 (1a, 1b) coming to the retention device is provided in a shaft end of the main shaft, and the cutting tool table 32 which mounts the turning turret 2 can move and position on an X-Z plane defined by a direction of an axis Z which is parallel to a main shaft axis a, and a direction of an axis X which is a cutting and feeding direction of the tool with respect to the work, and can move and position for the most part within an X-Y-Z space further including a direction of an axis Y which is orthogonal to the X-Z plane. The turning turret 2 is installed to the cutting tool table 32 via a turning apparatus 33 which turns at least at 90 degree around the axis Y (a direction of an axis B) in the cutting tool table 32, and the allocation shaft 24 rotates around the allocation shaft 24 which turns on the X-Z plane in conjunction with the turning of the turning apparatus 33.

This invention is further preferably employed in a lathe turning machine which is provided with a plurality of turrets including the turning turret 2, and can carry on the processing with respect to the other work by the other main shaft and a second turret 4 even under loading and unloading the work by the turning turret 2, particularly by being employed in the two main shaft opposed lathe turning machine which is provided with a plurality of turrets 2 and 4. In this case, it is possible to more securely avoid an interference (a collision and a contact) between the turning turret 2 carrying out the loading and unloading motion of the work and the other turret 4, by arranging the turning turret 2 upward with respect to the main shaft axis a, and arranging the other turret 4 downward, and since the carry-in position 75 and the carry-out position 85 of the work become higher, it becomes easy to secure an installing space of the carry-in apparatus 7 and the carry-out apparatus 8.

A loading and unloading method of a work in a machine tool in accordance with this invention is a loading and unloading method of a work in a machine tool provided with the structure mentioned above, the method comprising the steps of:
installing work grip devices 5 or 6 which are provided with opening and closing pawls 52 and an opening and closing mechanism thereof at least at one position of a tool attaching portion 31 of a turning turret 2; and
carrying out a loading or an unloading of the work between a carry-in position 75 or a carry-out position 85 which are set to predetermined positions of a peripheral edge portion of a moving region of the turning turret 2, and a retention device of the machine tool, by utilizing an opening and closing motion of the opening and closing pawls 52, a moving motion of a cutting tool table 32, and an allocating motion or a turning motion of the turning turret 2.

In accordance with this invention, since the carrier apparatus 7 which carries the raw material work in the machine tool only carries the raw material work in the carry-in position 75 which is set in the peripheral edge portion of the motion region of the turning turret 2, and a necessary attitude conversion of the work is carried out in the turning turret 2 side, it is not necessary to provide the attitude converting mechanism of the work in the carry-in apparatus 7, and the sensor for checking the loading of the work is not necessary. Further, since the carry-in position 75 of the raw material work can be defined at an optional position as long as it is in the peripheral edge portion of the moving region of the turning turret 2, a carry-in route of the work can be simplified. These matters are the same in the carrier apparatus 8 in the carry-out side of the processed work.

Further, in accordance with this invention, it is not necessary to provide the loader having the loader hand which carries the work in the work retention devices 1a and 1b positioned in the center portion of the processing region 9 of the work and carries out the transfer of the work with respect to the retention device, and the unloader, and it is sufficient to provide the carry-in apparatus 7 and the carry-out apparatus 8 which are simple in the structure and the control, and can be downsized in the apparatuses themselves, in place of the loader and the unloader. Accordingly, it is possible to widely reduce the cost of a whole of the processing apparatus which includes an automatic carry-in and an automatic carry-out of the work.

Further, since the turning turret 2 carries out the function of the conventional loader and unloader which transfers the work with respect to the retention devices 1a and 1b, it is possible to control the loading and unloading motion of the work by the control apparatus in the machine tool side, and it becomes easy to avoid the interference of the device due to the control error between the machine tool side and the loader and unloader side. Even in the machine tool which is provided with a plurality of retention devices and turrets, it is possible to prevent the interference among a plurality of turrets, cutting tool tables and retention devices by utilizing the interference checking function which is provided in the machine tool side. Accordingly, it is possible to easily avoid the interference with the other devices during the loading and unloading motion of the work by the turning turret.

### Brief Description of the Drawings

Fig. 1 is a schematic front elevational view showing one example of a lathe turning machine having two main shafts and two turrets;
Fig. 2 is a view showing an unloading motion of a work in the lathe turning machine in Fig. 1;
Fig. 3 is a view showing a loading motion of the work in the lathe turning machine in Fig. 1;
Fig. 4 is a view showing the other example of the unloading motion of the work in the lathe turning machine in Fig. 1;
Fig. 5 is a schematic side elevational view showing a loading and unloading motion of a work in a slant type lathe turning machine;
Fig. 6 is a view showing an example of a work grip device which is installed to a turret; and
Fig. 7 is a schematic view showing one example of an opening and closing structure of the work grip device.

### Detailed Description of the Embodiment of Invention

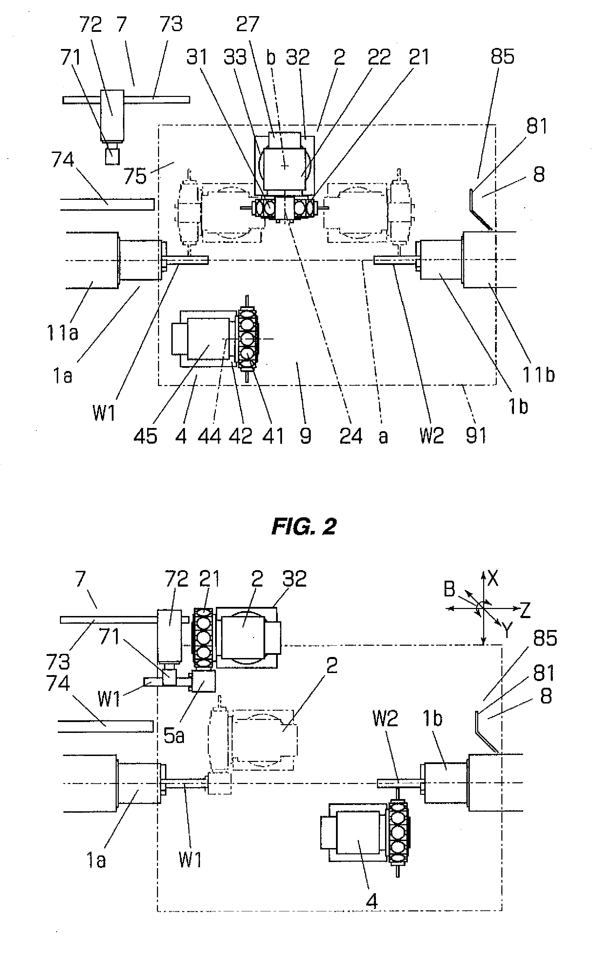

A description will be given below of an embodiment in accordance with this invention with reference to the accompanying drawings. Fig. 1 is a view showing a schematic device arrangement of a lathe turning machine having two main shafts and two turrets. Reference symbols 1a and 1b denote a first chuck and a second chuck which are installed to opposed ends of a first main shaft and a second main shaft which are arranged on a main shaft axis a, and reference symbols 11a and 11b denote a first main shaft table and a second main shaft table which rotatably support the first main shaft and the second main shaft. The first main shaft table 11a is provided so as to be fixed to a fixed position, and the second main shaft table 11b is freely moved and positioned in a direction which comes close to and away from the first main shaft table 11a along the main shaft axis a.

Reference numeral 2 denotes a turning turret which is arranged above the main shaft axis a, reference numeral 4 denotes a lower turret which is arranged in an opposite side to the turning turret 2 with respect to the main shaft axis a, reference numeral 21 denotes a turret head (hereinafter, refer to as "turning turret head") of the turning turret 2, reference numeral 41 denotes a turret head of the lower turret 4, and reference numerals 32 and 42 denote an upper cutting tool table and a lower cutting tool table which mount the turning turret 2 and the lower turret 4.

The upper cutting tool table 32 can freely move in a direction of an axis Z which is parallel to the main shaft axis a, a direction of an axis X which is orthogonal to the main shaft axis a and is a cutting and feeding direction of a tool, and a direction of an axis Y which is orthogonal to these axes. The turning turret 2 is mounted to the upper cutting tool table 32 via a turning apparatus 33 which turns in a direction of an axis B which is around the axis Y, and the turning turret head 21 is allocated and rotated around an allocation shaft 24 which is a center shaft thereof. Therefore, the allocation shaft 24 turns on a plane X-Z in conjunction with the turning of the turning apparatus 33. A starting point phase of the allocation shaft 24 is a position at which the allocation shaft 24 comes to the direction of the axis X while directing the turning turret head 21 to the main shaft axis a.

On the other hand, the lower turret 4 is mounted to the lower cutting tool table 42 which moves in the directions of the axis Z and the axis X while setting the allocation shaft 44 to the direction of the axis Z.

The movement in the directions of the axis X and the axis Z of the upper and lower cutting tool tables 32 and 42, the movement in the direction of the axis Y of the upper cutting tool table 32, and the turning in the direction of the axis B of the turning apparatus 33 are controlled by servo motors in the respective directions which are actuated by commands of an NC apparatus, and a position and a phase (a turning angle) in each of the directions of the axes can be accurately set by a processing program. Further, the turret heads 21 and 41 are rotationally driven by an allocation motor which is rotated under the commands of the NC apparatus, and the allocation position is structured such as to be fixed by a fitting of a face coupling which is provided between the turret heads 21 and 41 and fixed casings 22 and 45 which support them. Accordingly, the turning turret 2 can set a turning angle around the axis Y to an optional angle and can set a rotating angle around the allocation shaft 24 of the turning turret head 21 to a free angle by using a pitch angle of gears of the face coupling as a unit.

Reference numerals 7 and 8 denote carry-in and carry-out apparatuses of a work to be processed. The lathe turning machine shown in Fig. 1 is structured such that each of the devices is arranged by setting the axis X to a vertical direction. Therefore, the turning turret 2 is positioned just above the main shaft axis a, and the lower turret 4 is positioned just below. The carry-in apparatus 7 in the drawing is exemplified by one which is structured such that an elevating apparatus 72 provided with a hand 71 gripping the work in a lower end reciprocates along a guide 73 in the direction of the axis Z, and is structured such as to pick up a raw material work W1 on a stocker 74 by the hand 71 so as to carry to a work carry-in position 75 which is set to a moving end of the elevating apparatus 72. Further, the carry-out apparatus 8 is exemplified by one which has a chute structure unloading a processed work W2 which is unloaded to a carry-out position 85 to a lower side in the direction of the axis Z.

A processing region 9 of the machine tool, that is, a region in which the turrets 2 and 4 and the second chuck 1b move at a time of processing the work is zoned by a partition wall 91 shown by a two-dot chain line in Fig. 1, a slide shutter, an opening and closing door and the like. The carry-in position 75 of the carry-in apparatus and the carry-out position 85 of the carry-out apparatus are positioned in a peripheral edge portion of the processing region 9 while passing through the partition wall 91. More accurately, they are provided at the positions which can make a gripping device (a chuck or a finger) opposed to the positions 75 and 85, on the basis of the movement in the directions of the axes X, Y and Z of the upper cutting tool table 32, the turning of the turning apparatus and the allocating rotation of the turning turret head 21 at a time of installing the gripping device at one position of the tool attaching portion 31 of the turning turret 2, in an end portion of the moving region of the turning turret head 21.

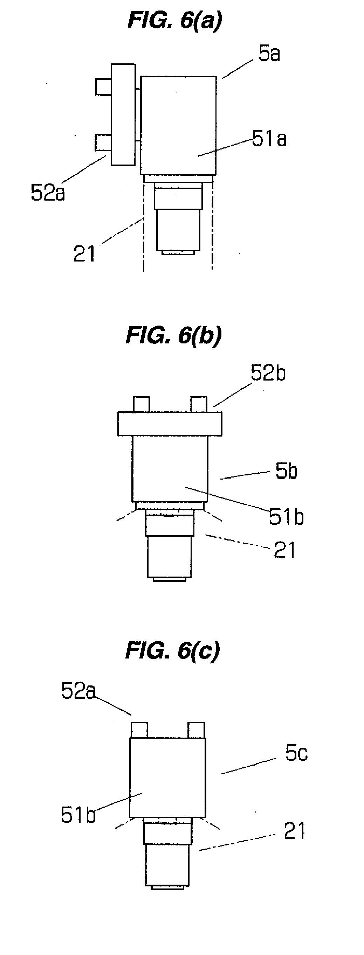

An example of a gripping device 5 (5a, 5b, 5c) which is installed to the turning turret head 21 is shown in Figs. 6(a)-6(c). Fig. 6(a) shows a structure in which three-jaw chuck 52a gripping an end portion of the work is provided in an angle holder 51a which is fixed to the tool attaching portion 31 of the turret 2, Fig. 6(b) shows a structure in which a finger 52b gripping a cylinder portion of the work is provided in a straight holder 51b which is fixed to the tool attaching portion 31, and Fig. 6(c) shows a structure in which three-jaw chuck 52a is provided in the same straight holder 51b. Taking into consideration a carrier of an elongate work, the gripping devices 5 is preferably structured such as to grip in a direction in which the gripped work does not make an interference with the tool which is attached to the adjacent tool attaching portion, that is, by setting the center axis of the work to a direction which is parallel to the allocation shaft 24 or a radial direction.

In this case, as a work gripping device which is installed to the tool attaching portion of the turret, there has been already provided a structure which opens and closes the opening and closing pawls 52 of the chuck 52a or the fingers 52b by an opening and closing mechanism which is driven by an electric motor or driven by a pneumatic pressure. As the opening and closing mechanism, for example, there is employed a mechanism which converts a forward and backward motion of a screw rotated by the electric motor and a forward and backward motion of a rod of a pneumatic cylinder into an opening and closing motion of the opening and closing pawls by a cam or a link.

The gripping device 5 which opens and closes the opening and closing pawls 52 on the basis of an electricity or a fluid pressure requires a wiring or a piping which feeds the electricity or the fluid pressure to the allocating and rotating turret head, and a structure of the turret becomes significantly complicated.

On the other hand, the turning turret 2 in the lathe turning machine shown in the drawing is provided with the work W1 which is fixed to the first chuck 1a, and the work W2 which is fixed to the second chuck 1b so as to be capable of processing, as shown by the two-dot chain line in Fig. 1, and is generally provided with a tool drive shaft which drives a rotary tool installed to the tool attaching portion, and a drive motor (a tool motor) thereof, for attaching a rotary tool such as a drill or a milling cutter to the tool attaching portion of the turret so as to make a processing like a machining center possible. The tool motor employs a reversibly rotatable one since the tool is reversely rotated, for example, at a time of pulling out a screw cutting tool (a tap) after processing a female thread.

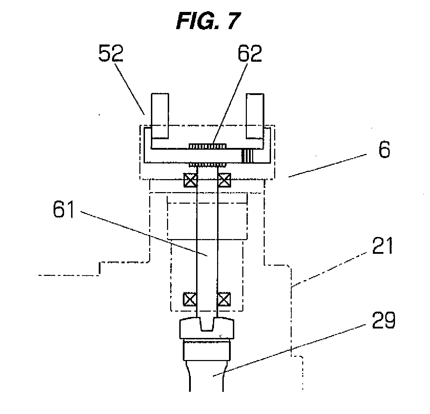

Accordingly, it is possible to achieve a gripping device 6 (Fig. 7) which is provided with an input shaft 61 connected to the tool drive shaft 29 within the turret head 21 by the same structure as the rotary tool at a time of attaching the tool attaching portion 31 to the holders 51a and 51b of the gripping device, and is provided with a mechanism converting a forward and reverse rotation of the input shaft into an opening and closing motion of the opening and closing pawls 52, for example, a rack and pinion mechanism 62.

If the gripping device 6 mentioned above is used, it is possible to freely and accurately set an opening and closing stroke and a work gripping force of the opening and closing pawls 52 by controlling a rotating direction, a rotating angle and a rotating torque of the tool motor 27 in accordance with the processing program, and it is not necessary to provide the electric wiring or the fluid piping in the turret. In this case, since the rack and pinion mechanism 62 is not changed in an opening and closing amount of the opening and closing pawls with respect to the rotating angle of the tool motor and a gripping force with respect to a torque of the tool motor, by the opening and closing position of the opening and closing pawls 52, it is easy to control the stroke and the gripping force of the opening and closing pawls 52 in accordance with the processing program.

Next, a description will be given of a continuous processing motion of the work in the lathe turning machine having two main shafts and two turrets in Fig. 1, with reference to Figs. 1 to 3. In this example, a gripping device 5a having an angle chuck structure shown in Fig. 6(a) is installed to one position of the tool attaching portion of the turning turret 2. The processing of the work is carried out in parallel by using the tool which is installed to the turning turret 2 and the tool which is installed to the lower turret 4, in a state in which the works W1 and W2 are fixed respectively to the first chuck 1a and the second chuck 1b.

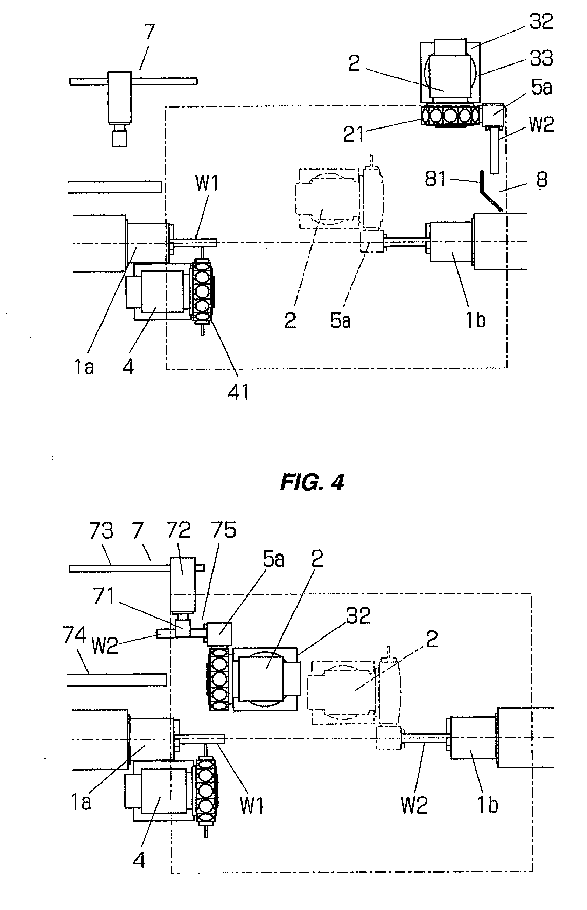

If the processing of the work W2 of the second chuck is finished, the turning turret 2 directs the gripping device 5a which is installed to the turning turret head to the work W2 side, on the basis of the turning in the direction of the axis B (hereinafter, refer to as "B turning") and the allocating rotation of the turning turret head 21, and makes the gripping device 5a opposed to the work W2 on the basis of the movement of the upper cutting tool table in the direction of the axis X and the direction of the axis Z (hereinafter, refer to as "X-Z movement"), and the movement of the upper cutting tool table in the direction of the axis Y (hereinafter, refer to as "Y movement") as occasion demands (two-dot chain line in Fig. 3). Further, it receives the work W2 by closing the opening and closing pawls 52 and opening the second chuck 1b, and moves to a position which is shown by a solid line in Fig. 3, on the basis of the X-Z movement shown in Fig. 3, the Y movement in case of necessity, the B turning and the allocating rotation, thereby unloading the work W2 onto an unloading chute 81 at the carry-out position 85. During the unloading motion of the work W2 by the turning turret 2, the work W1 of the first chuck can carry on the processing by the tool of the lower turret 4.

In a stage that the process of the work W1 of the first chuck is finished, and the turning turret 2 carrying out the unloading motion comes away from the region which makes an interference with the second main shaft table 11b, the second main shaft table 11b moves forward to the first main shaft table 11a side, the second chuck 1b retains a leading end of the work W1, and the second main shaft table 11b moves backward after the first chuck 1a is opened, whereby the work W1 is transferred to the second chuck 1b from the first chuck 1a.

The turning turret 2 which unloads the processed work during this time makes the gripping device 5 opposed to the raw material work W1 which is fed to the carry-in position 75 by the carry-in apparatus 7 so as to stand ready (a solid line in Fig. 2) on the basis of the B turning, the allocating rotation and the X-Z movement, and the necessary Y movement, and grips the raw material work W1 by closing the opening and closing pawls 52. Further, it makes the gripped raw material work W1 opposed to the first chuck 1a (the two-dot chain line in Fig. 2) on the basis of the X-Z movement and the necessary Y movement, and the B turning, and further moves in the direction of the axis Z so as to load the raw material work W1 to the first chuck 1a. At this time, it is possible to press the raw material work W1 to the first chuck 1a with a desired force by applying a torque limit to the feed motor in the direction of the axis Z of the upper cutting tool table 32. Further, the loading of the work is finished by closing the first chuck and opening the gripping device 5a so as to evacuate the gripping device 5a from the main shaft axis. During the loading motion of the work by the turning turret 2, it is possible to carry on the processing of the work W2 of the second chuck by the tool of the lower turret 4.

In the two main shafts opposed lathe turning machine or the lathe turning machine which uses the rotary tool, a phase control (a rotating angle control of the chuck around the main shaft axis a) of the chucks 1a and 1b is necessary for transferring the work and setting the processing position by the rotary tool. Therefore, if the raw material work can be loaded to the carry-in position 75 at a fixed phase, it is possible to set the phase of the work to the desired phase so as to load to the first chuck 1a.

The loading and unloading motions of the work by the turning turret 2 mentioned above can be generally controlled by the processing program of the NC apparatus in the machine tool side. Further, the interference between the gripping device 5 during the loading and unloading motion, the partition wall 91, the chucks 1a and 1b and the works fixed to them can be checked by utilizing an interference checking function of the tool which is mounted to the NC apparatus of the machine tool, and it is possible to prevent a collision. Further, in the lathe turning machine which is provided with two main shafts and a plurality of cutting tool tables, since the processing of the work fixed to the other chuck can be carried on even during the loading and unloading motion of the work by the turning turret 2, a processing efficiency of the work is not lowered.

In the example in Fig. 2, the processed work is unloaded to the carry-out apparatus 8 which is provided separately from the carry-in apparatus 7, however, the processed work can be unloaded by an apparatus (a carry-in and carry-out apparatus) 7 which is used also for carrying in. In other words, the turning turret 2 (a solid line in Fig. 4) which receives the processed work W2 on the basis of the motion described in Fig. 2 makes the processed work W2 which is gripped by the gripping device 5 opposed to an empty hand 71 which stands ready at the carry-in position (the carry-in and carry-out position) 75 (the two-dot chain line in Fig. 4), on the basis of the X-Z movement and the necessary Y movement, and the B turning. Further, the processed work W2 is transferred to the hand 71 by opening the gripping device 5a and closing the hand 71. The hand 71 returns the processed work to an original position (a position at which the work was set when the work was the raw material work) on the stocker 74, on the basis of the movement in the direction Z, the downward moving motion and the opening motion of the hand, grips the raw material work which is put adjacently so as to move to the carry-in and carry-out position 75, and transfers to the waiting gripping device 5a. Further, the raw material work is transferred to the first chuck 1a on the basis of the motion described in Fig. 3.

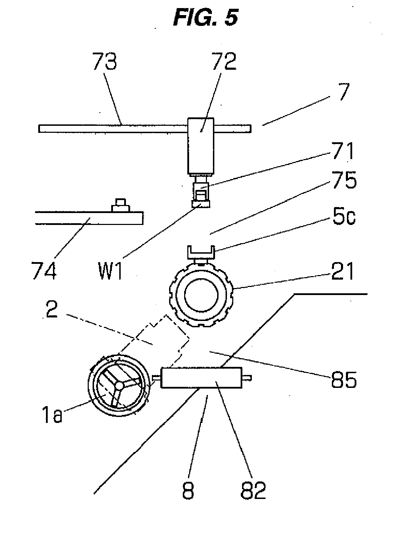

The example mentioned above is the example in the lathe turning machine in which the axis X is set to the vertical direction, however, in a more general slant type lathe turning machine in which the direction of the axis X is inclined to a direction of being lowered to an operator side, it is possible to employ the method in accordance with this invention by utilizing the allocating rotation of the turret head. Fig. 5 is a view showing an example thereof, and a gripping device of a straight chuck structure shown in Fig. 6(c) is used as the gripping device 5. The turning turret 2 can direct a gripping device 5c to a vertically up and down direction on the basis of a control of an allocation angle under an attitude that the allocation shaft is set to the direction Z by the B turning. In the example shown in the drawing, the raw material work W1 is received from the hand 71 of the carry-in apparatus 7 which is arranged above the gripping device 5c while directing the gripping device 5c to the upward at the carry-in position 75, the transfer of the work is carried out with respect to the first and second chucks 1a and 1b by setting the gripping device 5c to the direction of the axis Z on the basis of the B turning and the allocating rotation, and the processed work W2 is unloaded onto an unloading conveyor 82 by setting the gripping device 5c to a vertically downward direction.

As is understood from the description mentioned above, since this invention makes the turret which can be turned around the axis B and moves at least within the two-dimensional plane to have the function of loading and unloading the works having the various shapes in accordance with the various aspects, the loader provided with the rod or the arm which carries in and carried out the work to the center portion of the processing region, and the unloader are not necessary, it is possible to control the loading and unloading motion of the work by the processing program in the machine tool side, and it is possible to carry out the interference checking of the gripping device which is installed to the turning turret and the work which is gripped by the gripping device, by using the function of the machine tool side.

## Claims

1. A machine tool comprising:
a retention device which retains a work to be processed;
a cutting tool table which moves in a two-dimensional plane or a three-dimensional space;
a turret provided with a plurality of tool attaching portions which are mounted to the cutting tool table and are allocated toward the work on the basis of an allocating rotation; and
a turning apparatus which turns and positions the turret around an axis which is orthogonal to an allocating rotation axis thereof,
wherein a carrier apparatus carrying in or carrying out the work is provided at a predetermined position of a peripheral edge portion of a moving region of said turret, a work gripping device provided with an opening and closing pawls and an opening and closing mechanism thereof is installed to at least one position of said tool attaching portion, and a transfer of the work between said predetermined position and the retention device is carried out by utilizing an opening and closing motion of said opening and closing pawls, a moving motion of said cutting tool table, and an allocating motion and a turning motion of said turret.

2. A lathe turning machine comprising:
a main shaft which retains and rotates a work by a retention device provided in a shaft end;
a cutting tool table which is capable of moving and positioning in a direction of an axis Z which is parallel to a main shaft axis and a direction of an axis X which is a feeding direction of a tool with respect to the work retained to the main shaft;
a turret which allocates and rotates around an axis on an X-Z plane in the cutting tool table; and
a turning apparatus which turns and positions the turret at least at 90 degree around an axis Y which is orthogonal to the X-Z plane,
wherein a carrier apparatus carrying in or carrying out the work is provided at a predetermined position of a peripheral edge portion of a moving region of said turret, a work gripping device provided with an opening and closing pawls and an opening and closing mechanism thereof is installed to at least one position of a plurality of tool attaching portions provided in said turret, and a transfer of the work between said predetermined position and the retention device is carried out by utilizing an opening and closing motion of said opening and closing pawls, a moving motion of said cutting tool table, and an allocating motion and a turning motion of said turret.

3. A lathe turning machine as claimed in claim 2, wherein said cutting tool table is movable in said direction of the axis Y.

4. A lathe turning machine as claimed in claim 2 or 3, further comprising a first main shaft and a second main shaft which carry out a delivery of the retained work by making said retention device opposed to the main shaft axis and moving one close to and away from the other, said turret, and a second turret which is arranged in an opposite side to the turret with respect to said main shaft axis.

5. A loading and unloading method of a work in a machine tool, comprising the steps of:
using the machine tool provided with a retention device which retains a work to be processed, a cutting tool table which moves within a two-dimensional plane or a three-dimensional space, a turret having a plurality of tool attaching portions which are mounted to the cutting tool table and are allocated toward the work on the basis of an allocating rotation, and a turning apparatus which turns the turret around an axis which is orthogonal to an allocating rotation axis thereof;
installing a carrier apparatus which carries in or carries out the work at a predetermined position of a peripheral edge portion of a moving region of said turret;
installing a work gripping device having an opening and closing pawls and an opening and closing mechanism thereof at least to one position of said tool attaching portions; and
carrying out a transfer of the work between said predetermined position and the retention device by utilizing an opening and closing motion of said opening and closing pawls, a moving motion of said cutting tool table, and an allocating motion or a turning motion of said turret.
